Europäisches Patentamt

(19) European Patent Office

Office européen des brevets

(11) Numéro de publication: **0 161 167**
**B1**

(12) **FASCICULE DE BREVET EUROPEEN**

(45) Date de publication du fascicule du brevet:
**05.08.87**

(21) Numéro de dépôt: **85400707.7**

(22) Date de dépôt: **09.04.85**

(51) Int. Cl.⁴: **F 24 H 9/12**

(54) **Appareil à eau chaude muni d'un diffuseur d'eau froide.**

(30) Priorité: **13.04.84 FR 8405889**

(43) Date de publication de la demande:
**13.11.85 Bulletin 85/46**

(45) Mention de la délivrance du brevet:
**05.08.87 Bulletin 87/32**

(84) Etats contractants désignés:
**BE CH DE FR IT LI**

(56) Documents cités:
**FR - A - 2 183 339**
**FR - A - 2 417 727**

(73) Titulaire: **COMPAGNIE EUROPEENNE POUR
L'EQUIPEMENT MENAGER "CEPEM", 74, rue du
Surmelin, F-75020 Paris (FR)**

(72) Inventeur: **Thiry, Gérard, THOMSON-CSF SCPI 173, bld
Haussmann, F-75379 Paris Cedex 08 (FR)**

(74) Mandataire: **Phan, Chi Quy et al, THOMSON-CSF
SCPI 19, avenue de Messine, F-75008 Paris (FR)**

# Description

La présente invention concerne un appareil à eau chaude muni d'un diffuseur d'eau froide.

Dans les appareils à eau chaude tels que les chauffe-eau, les réchauffeurs ou les stockeurs d'eau chaude quels que soient leur énergie de chauffage et leur type de fonctionnement, par exemple accumulation, semi-accumulation ou instantané, l'eau froide est introduite dans leur cuve en un point bas, par un orifice appelé tubulure d'alimentation et l'on recherche à éviter que cette eau froide ne se mélange avec l'eau déjà contenue, de manière à ne pas perturber la stratification thermique et continuer à soutirer l'eau la plus chaude en haut de leur cuve par un orifice de distribution.

La sortie d'eau la plus chaude est obtenue grâce à la poussée exercée par l'introduction de la même quantité d'eau froide dans leur cuve, et quel que soit leur montage, hors ou sous pression.

Généralement, à la fin d'un cycle de chauffage, l'eau aux différents points de leur cuve est presque à la même température. A chaque soutirage, l'eau chaude prélevée est remplacée par de l'eau froide. Pour permettre l'utilisatione maximale de l'eau chaude à la température où elle a été portée par la chauffe, l'idéal serait qu'il n'y ait aucun mélange entre l'eau froide introduite et l'eau chaude restante.

Le phénomène de conduction et de convection, tendant à homogénéiser thermiquement l'ensemble des masses de liquide en présence, perturbe la stratification thermique dans les cycles normaux de fonctionnement, mais ce sont surtout les phénomènes mécaniques, liés à l'énergie mécanique libérée par l'eau froide entrant dans leur cuve et créant un brassage de l'eau, qui perturbent considérablement la stratification thermique. C'est donc de la qualité du diffuseur d'eau froide que dépendra l'efficacité de ces appareils.

Les diffuseurs d'eau froide connus tels ceux décrits dans FR-A-2 417 727 sont généralement constitués d'un tube comportant des orifices latéraux, soudé directement sur la cuve de ces appareils ou assemblé avec celle-ci selon des procédés connus. Dans le FR-A-2 183 339 est également décrit un diffuseur d'eau froide formé d'un tube d'entrée d'eau monté dans la partie inférieure d'une cuve d'un appareil à eau chaude, et ayant une extrémité, en saillie dans cette cuve, surmontée d'un chapeau et munie dans sa paroi audessous de ce chapeau des fentes latérales servant de voie de sortie pour l'eau froide dans ce tube d'entrée d'eau. Ces types connus de diffuseurs d'eau froide créent dans la masse de liquide une stratification de mauvaise qualité.

On connaît également un diffuseur d'eau froide constitué d'un tube d'entrée d'eau introduit dans une tubulure d'alimentation d'un appareil et surmonté d'un chapeau fixé dans la cuve de cet appareil et dans l'axe de la tubulure d'alimentation de ce dernier.

Ce type connu de diffuseur d'eau froide crée également dans la masse de liquide une stratification de mauvaise qualité et de plus il présente des inconvénients de montage car le chapeau doit être préalablement introduit à l'intérieur de l'appareil, puis fixé sur celui-ci. En outre, au cours d'une opération d'application d'un revêtement protecteur de l'intérieur de l'appareil (émaillage par exemple), le chapeau du diffuseur, déjà en place, perturbe le dépôt de ce revêtement au niveau de la tubulure.

La présente invention a pour but d'éviter ces inconvénients et permet de réaliser un appareil d'eau chaude dans lequel est obtenue une stratification efficace de la masse de liquide améliorant ainsi le rendement de l'appareil, au moyen d'un diffuseur économique, pouvant être installé dans l'appareil après l'opération d'application d'un revêtement intérieur protecteur de la cuve de cet appareil.

La présente invention a pour objet un appareil à eau chaude muni dans la partie inférieure de sa cuve froide formé d'un tube d'entrée d'eau ayant une extrémité surmontée d'un chapeau, en saillie dans cette cuve et munie dans sa paroi, audessous de ce chapeau, une fente radiale servant de voie de sortie pour l'eau froide dans ce tube d'entrée, caractérisé en ce que, pour assurer une entrée d'eau froide dans la cuve avec un écoulement parallèle au tube d'entrée d'eau et vers la partie inférieure de cette cuve avec une énergie réduite, le diffuseur d'eau froide comprend dans le bord amont de la fente radiale servant de voie de sortie pour l'eau froide dans ce tube d'entrée d'eau, un étranglement à l'écoulement de l'eau froide débouchant dans cette fente et ce chapeau.

Il est décrit ci-après, à titre indicatif et en référence aux dessins annexés, des exemples de réalisation de l'invention. Dans ces dessins,

— la figure 1 représente, en coupe partielle, un appareil à eau chaude muni d'un diffuseur à eau froide, appareil réalisé selon l'invention;

— la figure 2 représente, à une autre échelle en coupe, un premier exemple de réalisation d'un diffuseur à eau froide de l'appareil de la figure 1, et

— la figure 3 représente, en coupe, un deuxième exemple de réalisation d'un diffuseur à eau froide de l'appareil de la figure 1.

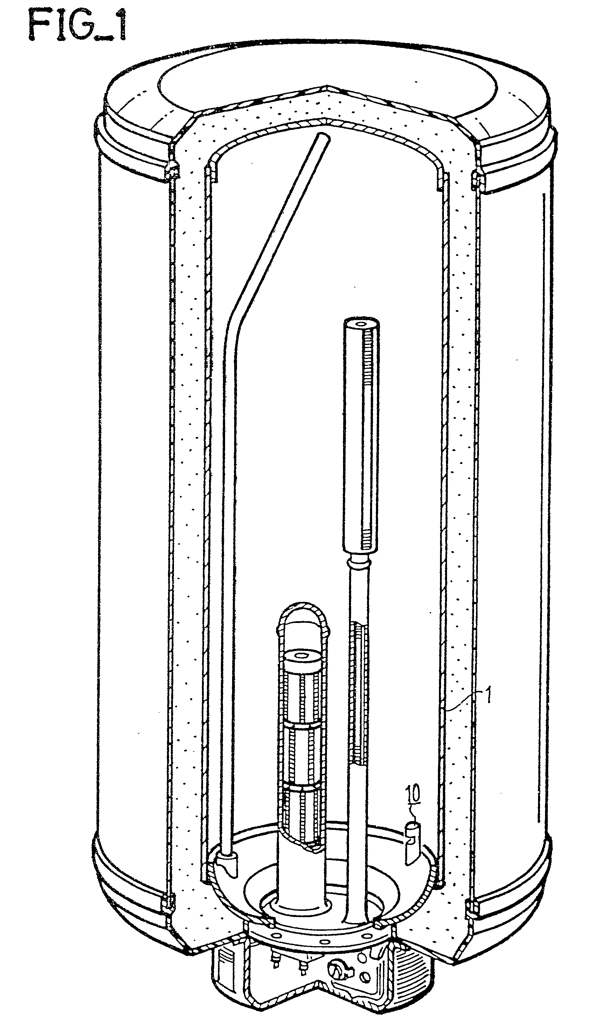

L'appareil à eau réalisé selon l'invention et représenté dans la figure 1 comprend une cuve 1 sur une partie inférieure de la paroi de laquelle est soudée ou fixée par un moyen connu une tubulure 2.

Dans cette tubulure 2 est enfilée une manchette 3, en matière isolante telle que du polyéthylène. La tubulure 2 et la manchette 3 affleurent la paroi de la cuve 1. L'appareil à eau chaude comprend un diffuseur d'eau froide 10 constitué d'un tube d'entrée d'eau 11 monté dans la manchette 3, avec son extrémité en saillie dans la cuve 1 et surmonté d'un chapeau 14.

Selon une caractéristique importante, pour assurer une entrée d'eau froide dans la cuve 1 avec un écoulement parallèle au tube d'entrée d'eau et vers la partie inférieure de cette cuve 1 avec une énergie réduite, le diffuseur d'eau froide 10 comprend d'une part, dans la partie supérieure du tube d'entrée d'eau 11 en dessous du chapeau 14, une fente latérale ou radiale 13 servant de voie de sortie pour l'eau froide s'écoulant dans le tube 11, et d'autre part, dans le bord amont de cette fente laté-

rale ou radiale 13, un étranglement 12 à écoulement de l'eau froide débouchant dans cette fente 13 et ce chapeau 14.

Selon une autre caractéristique, l'étranglement 12 formé dans le bord amont de la fente radiale 13 est constitué par un retour radial de ce bord amont de cette fente radiale 13, qui définit un orifice 12' de dimension plus faible que celle du tube d'entrée d'eau 11 pour l'écoulement ou l'eau froide débouchant dans la fente 13 et dans le chapeau 14. L'étranglement 12 est prédéterminé de manière à freiner la force d'écoulement tout en assurant un débit minimum préétabli d'eau froide entrant dans la cuve 1 de l'appareil à travers la fente 13. La paroi latérale 11' du tube 11, qui constitue le bord aval de la fente radiale ou latérale 13, forme avec une pastille 14' le chapeau 14. Les dimensions respectives des diverses parties du diffuseur d'eau froide 10 telles que tube 11, étranglement 12, fente 13, chapeau 14, sont déterminées selon une technique connue de manière que l'énergie du jet d'eau froide sortant de l'étranglement 12 soit absorbée dans un tourbillonnement d'eau qui se forme dans le chapeau 14 et l'eau froide sortant du chapeau 14 guidée par le bord amont de la fente 13 s'écoule parallèlement au tube 11 en redescendant vers le bas de la cuve 1 avec une énergie réduite.

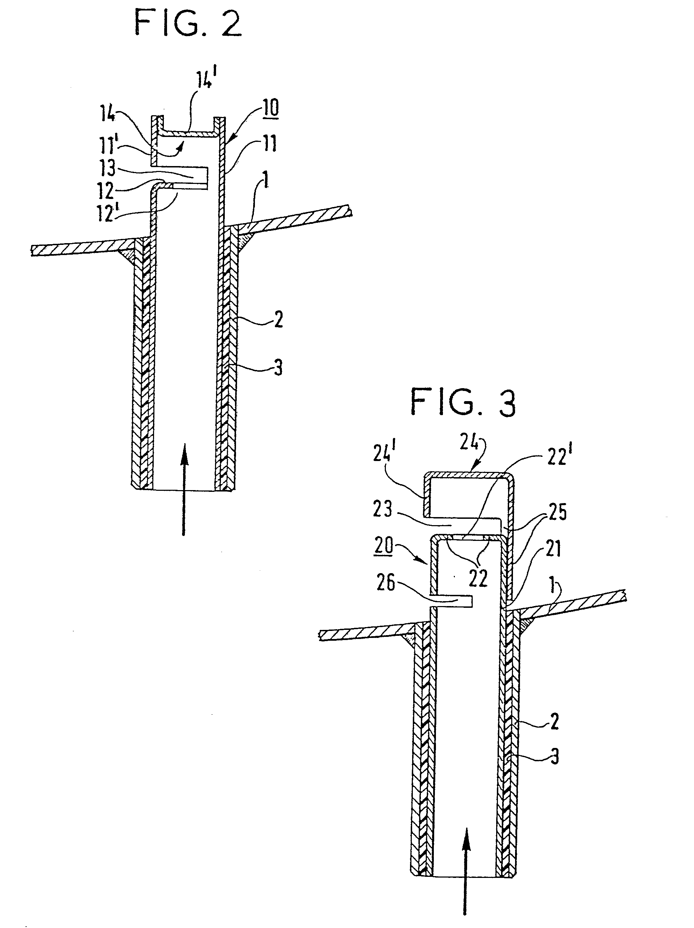

Dans l'exemple illustré dans la figure 2, l'orifice 12' défini par le retour radial du bord amont de la fente radiale 13 est excentré par rapport à l'axe du tube d'entrée d'eau 11.

Le montage de ce diffuseur 10 peut s'effectuer par le côté extérieur de l'appareil, étant donné que le diamètre extérieur du tube 11 est prévu légèrement inférieur au diamètre intérieur de la manchette isolante 3.

Le diffuseur 10 débouche dans la cuve 1 selon une hauteur prédéterminée pour y assurer une bonne stratification thermique de la masse de liquide.

Dans une variante de réalisation illustrée dans la figure 2 le diffuseur d'eau froide 20 comprend un tube d'entrée 21 muni à son extrémité en saillie dans la cuve 1 d'un rebord rabattu radialement vers l'intérieur pour former un étranglement 22 définissant un orifice 22' de plus faible dimension que celle du tube 21 pour l'écoulement de l'eau et un chapeau 24 comportant une collerette 24' et une languette 25. Ce chapeau 24 est fixé par sa languette 25 sur l'extrémité intérieure du tube 21 pour former avec celle-ci une fente latérale ou radiale 23 de sortie d'eau froide de manière que le bord de la collerette 24' constitue un bord aval de cette fente radiale 23, et que l'extrémité rabattue du tube 21 définissant l'étranglement 22 constitue le bord amont de cette fente radiale 23. Le tube 21 peut comprendre aussi, au voisinage de la paroi de la cuve 1, une autre fente radiale 26. Le fonctionnement du diffuseur d'eau froide 20 est analogue à celui du diffuseur d'eau froide 10.

Le montage de ce diffuseur 20 s'effectue également par le côté extérieur de l'appareil, le diamètre extérieur du chapeau 24 étant plus petit que le diamètre intérieur de la tubulure 2 et la manchette 3 étant placée préalablement autour du tube 21.

Dans l'exemple illustré à la figure 3, l'orifice 22' défini par le retour radial du bord amont de la fente radiale 23 est coaxial avec l'axe du tube d'entrée d'eau 21.

Le diffuseur 20 débouche dans la cuve selon une hauteur prédéterminée pour y assurer une bonne stratification thermique de la masse de liquide.

Dans l'exemple des figures 2 et 3, les tubes d'entrée d'eau 11, 21 sont respectivement immobilisés dans la tubulure 2 selon les techniques connues, par exemple par un sertissage annulaire non représenté.

Dans ces deux types de diffuseurs 10 et 20 l'énergie du jet d'eau froide sortant des étranglements 12, 22 est absorbée dans un tourbillonnement d'eau qui se forme dans les chapeaux 14, 24 et l'eau froide sortant du chapeau guidée par les bords amonts des fentes 13 et 23 s'écoule parallèlement aux tubes d'entrée d'eau 11 et 21 en redescendant vers la partie inférieure de la cuve 11 avec une énergie réduite.

Bien entendu les diffuseurs 10 et 20 selon l'invention peuvent être fabriqués dans une matière appropriée quelconque, en plusieurs éléments ou en une seule pièce et selon un mode de réalisation connu quelconque, tel qu'emboutissage et soudage des chapeaux 14, 24 dans le cas d'un diffuseur constitué par assemblage de plusieurs pièces métalliques ou moulage dans le cas d'un diffuseur réalisé en une seule pièce.

## Revendications

1. Appareil à eau chaude muni dans la partie inférieure de sa cuve (1) d'un diffuseur d'eau froide formé d'un tube d'entrée d'eau (11, 21) ayant une extrémité surmontée d'un chapeau (14, 24), en saillie dans cette cuve (1) et munie dans sa paroi, au-dessous de ce chapeau, d'une fente radiale (13, 23) servant de voie de sortie pour l'eau froide dans ce tube d'entrée d'eau, caractérisé en ce que, pour assurer une entrée d'eau froide dans la cuve (1) avec un écoulement parallèle à ce tube d'entrée d'eau et vers la partie inférieure de cette cuve (1) avec une énergie réduite, le diffuseur d'eau froide (10, 20) comprend dans le bord amont de la fente radiale (13, 23) servant de voie de sortie pour l'eau froide dans le tube d'entrée d'eau (11, 21) un étranglement (12, 22) à l'écoulement de l'eau froide débouchant dans cette fente (13, 23) et ce chapeau (14, 24).

2. Appareil selon la revendication 1, caractérisé en ce que dans le diffuseur d'eau froide (10, 20), l'étranglement (12, 22) formé dans le bord amont de la fente radiale (13, 23) est constitué par un retour radial de ce bord amont de cette fente radiale, qui définit un orifice (12', 22') de dimension plus faible que celle du tube d'entrée d'eau (11, 21).

3. Appareil selon l'une des revendications 1 et 2, caractérisé en ce que dans le diffuseur d'eau froide (10), l'orifice (12') défini par le retour radial du bord amont de la fente radiale (13) est excentré par rapport à l'axe du tube d'entrée d'eau (11).

4. Appareil selon l'une des revendications 1 et 2, caractérisé en ce que dans le diffuseur d'eau froide (20), l'orifice (22') défini par le retour radial du bord amont de la fente radiale (23) est coaxial avec l'axe du tube d'entrée d'eau (21).

## Patentansprüche

1. Heisswassergerät, das am unteren Teil seines Behälters (1) mit einem Kaltwasserverteiler versehen ist, der aus einem Wassereinlassrohr (11, 21) besteht, von dem ein Ende mit einer Haube (14, 24) versehen ist, das in diesen Behälter (1) hineinragt und in seiner Wand, unterhalb der Haube, einen radialen Schlitz (13, 23) aufweist, der als Auslassweg für das kalte Wasser in diesem Wassereinlassrohr dient, dadurch gekennzeichnet, dass der Kaltwasserverteiler (10, 20) für den Eintritt des kalten Wassers in den Behälter (1) gemäss einer Strömung parallel zu diesem Wassereinlassrohr und in Richtung auf den unteren Teil dieses Behälters mit verringerter Energie am oberen Rand vor dem radialen Schlitz (13, 23), der als Auslassweg des kalten Wassers im Wassereinlassrohr (11, 21) dient, eine Verengung (12, 22) für die Strömung des kalten Wassers aufweist, das in diesen Schlitz (13, 23) und diesen Deckel (14, 24) ausströmt.

2. Gerät nach Anspruch 1, dadurch gekennzeichnet, dass im Kaltwasserverteiler (10, 20) die am vorderen Rand des radialen Schlitzes (13, 23) gebildete Verengung (12, 22) aus einer radialen Umbiegung dieses oberen Rands des radialen Schlitzes besteht, die eine Öffnung (12', 22') definiert, deren Abmessung geringer ist als die des Wassereinlassrohrs (11, 21).

3. Gerät nach einem der Ansprüche 1 und 2, dadurch gekennzeichnet, dass bei dem Kaltwasserverteiler (10) die von der radialen Umbiegung des vorderen Rands des radialen Schlitzes (13) gebildete Öffnung in bezug auf die Achse des Wassereinlassrohrs (11) exzentrisch ist.

4. Gerät nach einem der Ansprüche 1 und 2, dadurch gekennzeichnet, dass bei dem Kaltwasserverteiler (20) die von der radialen Umbiegung des oberen Rands des radialen Schlitzes (23) gebildete Öffnung (22') koaxial zur Achse des Wassereinlassrohrs (21) liegt.

## Claims

1. A hot water apparatus supplied in the lower part of its tank (1) with a cold water distributor formed by a water inlet tube (11, 21) one end of which is covered by a cap (14, 24) and which protrudes into this tank and is supplied in its wall, below said cap, with a radial slot (13, 23) serving as outlet channel for the cold water into this water inlet tube, characterized in that, in view of ensuring an inlet of cold water into the tank (1) with a flow parallel to this water inlet tube and towards the lower part of this tank (1) with reduced energy, the cold water distributor (10, 20) comprises in the upstream edge of the radial slot (13, 23) serving as outlet channel for the cold water into the water inlet tube (11, 21) a throat (12, 22) for the flow of the cold water ending in this slot (13, 23) and this cap (14, 24).

2. An apparatus according to claim 1, characterized in that in the cold water distributor (10, 20), the throat (12, 22) formed in the upstream edge of the radial slot (13, 23) is constituted by a radial bend of this upstream edge of this radial slot, which defines an orifice (12', 22') of a smaller dimension than that of the water inlet tube (11, 21).

3. An apparatus according to one of claims 1 and 2, characterized in that in the cold water distributor (10), the orifice (12') defined by the radial bend of the upstream edge of the radial slot (13) is excentric with respect to the axis of the water inlet tube (11).

4. An apparatus according to one of claims 1 and 2, characterized in that in the cold water distributor (20), the orifice (22') defined by the radial bend of the upstream edge of the radial slot (23) is coaxial to the axis of the water inlet tube (21).

FIG_1

# FIG. 2

# FIG. 3